# EUROPEAN PATENT SPECIFICATION

(11) **EP 4 659 067 B1**
(45) Date of publication and mention of the grant of the patent: **18.02.2026**
(21) Application number: 25723965.7
(22) Date of filing: 24.04.2025
(51) Int. Cl.: G02C 7/04, B29D 11/00

(54) **CONTACT LENSES AND METHOD RELATING THERETO**
KONTAKTLINSEN UND ZUGEHÖRIGES VERFAHREN
LENTILLES DE CONTACT ET PROCÉDÉ Y ASSOCIÉ

(30) Priority: 25.04.2024 US 202463638521 P
(43) Date of publication of application: 10.12.2025
(73) Proprietor: CooperVision International Limited, Fareham PO15 5RL (GB)
(72) Inventor: ARUMUGAM, Baskar, Pleasanton, CA 94588 (US); CHAMBERLAIN, Paul, Pleasanton, CA 94588 (US)
(74) Representative: Abel & Imray LLP
(86) International application number: PCT/GB2025/050876
(87) International publication number: WO 2025/224450

(56) References cited:
- EP-A1- 1 967 892
- US-A1- 2020 363 654
- US-A1- 2021 282 966
- US-A1- 2024 118 560

## Description

### Technical Field

The present disclosure relates to contact lenses. The present disclosure relates especially, but not exclusively, to contact lenses for slowing the progression of myopia, and to methods of manufacturing such lenses.

### Background

Many people, including both children and adults, require ophthalmic lenses to correct for myopia (short-sightedness). Uncorrected myopic eyes focus incoming light from distant objects to a location in front of the retina. Consequently, the light diverges towards, and is out of focus upon arrival at, the retina. Conventional ophthalmic lenses (e.g., spectacle lenses and contact lenses) for correcting myopia move the focus onto the retina. Spectacle lenses move the focus by causing divergence of incoming light from distant objects before it reaches the eye. Contact lenses, when on the eye, move the focus by reducing the convergence of incoming light from distant objects.

It was suggested several decades ago that progression of myopia in children or young people could be slowed or prevented by under-correcting, i.e., moving the focus towards but not quite onto the retina. Such an approach can be described as providing a "myopic defocus". However, that approach necessarily results in degraded distance vision compared with the vision obtained with a lens that fully corrects for myopia. Moreover, it is now regarded as doubtful that under-correction is effective in controlling developing myopia because such an under-correction approach will focus light from distant targets in front of the retina. However, since myopia is believed to be developing because of chronic viewing of near targets, under-correction will likely not affect the retinal images of near targets or provide a "myopic defocus" to stop the eye from growing. A more recent approach to correct for myopia is to provide lenses having both one or more regions that provide full correction of distance vision and one or more regions that undercorrect, or deliberately induce, myopic defocus. It has been shown that this approach can prevent or slow down the development or progression of myopia in children or young people, whilst providing good distance vision.

In the case of lenses having regions that provide defocus, the regions that provide fullcorrection of distance vision are usually referred to as base power regions and the regions that provide under-correction or deliberately induce myopic defocus are usually referred to as myopic defocus regions or add power regions (because the dioptric power is more positive, or less negative, than the power of the distance correction regions). A surface (typically the anterior surface) of the add power region(s) has a smaller radius of curvature than that of the distance power region(s) and therefore provides a more positive or less negative power to the eye. The add power region(s) are designed to focus incoming parallel light (i.e., light from infinity, or in practice the far-field of the optical system) within the eye in front of the retina (i.e., closer to the lens), whilst the distance power region(s) are designed to focus light and form an image at the retina (i.e., further away from the lens).

A known type of contact lens that reduces the progression of myopia is a dual-focus contact lens, available under the name of MISIGHT (CooperVision, Inc.). This dual-focus lens is different to bifocal or multifocal contact lenses configured to improve the vision of presbyopes, in that the dual-focus lens is configured with certain optical dimensions to enable a person who is able to accommodate to use the distance correction (i.e., the base power) to focus images on or close to the retina while viewing both distant objects and near objects. The treatment zones of the dual-focus lens that have an add power will always focus light more anteriorly compared to a lens without treatment zones, and thus provide a myopically defocused image at both distant and near viewing distances.

Further lenses have been developed which can be used in the treatment of myopia, and which are designed to eliminate the halo that is observed around focused distance images. In these lenses, the annular region is configured such that no single, on-axis image is formed in front of the retina, thereby preventing such an image from being used to avoid the need for the eye to accommodate near targets. Rather, distant point light sources are imaged by the annular region to a ring-shaped focal line at a near add power focal surface, preventing a useful image from being generated at this plane. The second advantage of this type of lens is that the rays forming the ring image can overlap when reaching the retina leading to a reduced size of the blur patch and eliminating the surrounding 'halo' on the retina.

EP1967892A1 discloses contact lenses and methods for preventing or slowing progression of myopia. The contact lenses include a vision correction area and a myopic defocus area. Various examples of the contact lenses are described. Methods include providing the present contact lenses, or applying one or more of the contact lenses to an eye or eyes of a person. The contact lenses and methods are particularly useful in children.

US2020/363654A1 discloses a medical device for management of an axial length growth of an eye of a subject, the eye having a pupil. The device comprises a central region having a first power, a transition region surrounding the central region and having a width at most equal to 1.5 mm, and a peripheral region surrounding the transition region. The peripheral region has a second power. A surface area of each one of the central and peripheral regions is chosen as a function of a surface area of the pupil of the eye.

US2021/282966A1 discloses an ophthalmic lens for treating myopia. The lens comprises a base lens with a front surface and a back surface, a first power profile selected to correct or substantially correct for a distance refractive error of the eye, and one or more myopia control elements on at least one of the front and back surfaces of the lens. The lenses comprises a first viewing region having a dimension selected based, at least in part, on a concentration of a pharmaceutical agent for use in conjunction with an ophthalmic lens. The first viewing region is configured to minimize, reduce and/or eliminate vision disturbances for distance vision. The lens comprises a second viewing region comprising a power profile that is relatively more positive compared to the first viewing region; wherein at least one of the size of the second viewing region and the relatively more positive power of the second viewing region is selected based, at least in part, on the concentration of the pharmaceutical agent.

US 2024/118560A1 discloses contact lenses and methods of manufacturing such lenses. The lenses include an optic zone comprising a central region, the central region having a first optical axis, a centre of curvature that is on the optical axis, and a diameter that is less than 2 mm. The optic zone comprises an annular region, wherein the annular region comprises a plurality of concentric annular zones. Each treatment zone has a radial sagittal power profile that increases with increasing radial distance from the optical axis.

### Summary

The invention is defined by independent claims 1 and 14. Embodiments are defined by the dependent claims. According to a first aspect, the present disclosure provides a contact lens comprising a lens body. The lens body includes an optic zone, a peripheral zone circumscribing the optic zone, and a lens edge circumscribing the peripheral zone. The optic zone comprises a central region having a curvature that is centred on an optical axis. The central region has a distance corrective refractive power and a chord diameter of 2.7 mm plus or minus 0.04 mm. The optic zone comprises a first annular zone circumscribing the central region. The first annular zone is a myopic defocus zone having a refractive power that is more positive than the refractive power of the central region. The first annular zone has a curvature that is centred on the optical axis, and a radial width of 0.7 mm plus or minus 0.01 mm. The optic zone comprises a second annular zone circumscribing the first annular zone. The second annular zone is a distance corrective zone and has a curvature that is centred on the optical axis. The second annular zone has a radial width of 0.6 mm plus or minus 0.01 mm. The optic zone comprises a third annular zone circumscribing the second annular zone. The third annular zone is a myopic defocus zone having a refractive power that is more positive than the refractive power of the central region. The third annular zone has a curvature that is centred on the optical axis and a radial width of 0.8 mm plus or minus 0.015 mm. The central region comprises a fourth annular zone circumscribing the fourth annular zone. The fourth annular zone is a distance corrective zone having a curvature that is centred on the optical axis. The fourth annular zone has a radial width of 0.925 mm plus or minus 0.015 mm.

According to a second aspect, the present disclosure provides a method of manufacturing a contact lens. The lens is a lens according to the first aspect. The method comprises forming a contact lens. The contact lens comprises a lens body. The lens body includes an optic zone, a peripheral zone circumscribing the optic zone, and a lens edge circumscribing the peripheral zone. The optic zone comprises a central region having a curvature that is centred on an optical axis. The central region has a distance corrective refractive power and a chord diameter of 2.7 mm plus or minus 0.04 mm. The optic zone comprises a first annular zone circumscribing the central region. The first annular zone is a myopic defocus zone having a refractive power that is more positive than the refractive power of the central region. The first annular zone has a curvature that is centred on the optical axis, and a radial width of 0.7 mm plus or minus 0.01 mm. The optic zone comprises a second annular zone circumscribing the first annular zone. The second annular zone is a distance corrective zone and has a curvature that is centred on the optical axis. The second annular zone has a radial width of 0.6 mm plus or minus 0.01 mm. The optic zone comprises a third annular zone circumscribing the second annular zone. The third annular zone is a myopic defocus zone having a refractive power that is more positive than the refractive power of the central region. The third annular zone has a curvature that is centred on the optical axis and a radial width of 0.8 mm plus or minus 0.015 mm. The optic zone comprises a fourth annular zone circumscribing the fourth annular zone. The fourth annular zone is a distance corrective zone having a curvature that is centred on the optical axis. The fourth annular zone has a radial width of 0.925 mm plus or minus 0.015 mm.

It will of course be appreciated that features described in relation to one aspect of the present disclosure may be incorporated into other aspects of the present disclosure. For example, the method of the disclosure may incorporate features described with reference to the apparatus of the disclosure and vice versa.

### Description of the Figures

Embodiments of the present invention will now be described by way of example only with reference to the accompanying schematic drawings of which:
FIG. 1A is a top view of a known contact lens for use in the prevention of myopia;
FIG. 1B is a side view of the contact lens of FIG. 1A.
FIG. 2A is a schematic ray diagram for the lens of FIGS. 1A-B, when the lens is positioned on an eye;
FIG. 2B shows a light pattern at a proximal focal surface of the lens of FIG. 1A formed from a distant point source, when the lens is positioned on an eye;
FIG. 2C shows a light pattern at a distal focal surface of the lens of FIG. 1A formed from a distant point source, when the lens is positioned on an eye;
FIG. 3A is a top view of a contact lens according to an embodiment of the present disclosure;
FIG. 3B is a side view of the contact lens of FIG. 3A;
FIG. 4 is a plot showing the proportion of light arriving at a lens wearer's retina that is myopically defocused (i.e., focused at a point in front of the retina), hyperopically defocused (i.e., focused at a point that is behind the retina), and emmetropic (i.e., focused at the lens wearer's retina), for different various different lenses used in the treatment of myopia;
FIG. 5 is a plot showing change in axial growth as a function of time for untreated eyes, lens wearers wearing known lenses for slowing the progression of myopia, and for lens wearers wearing the lens of FIGS. 3A and 3B;
FIG. 6 is a plot showing refractive error change as a function of time for lens wearers wearing known lenses for slowing the progression of myopia, and for lens wearers wearing the lens of FIGS. 3A and 3B; and
FIG. 7 is a flow chart showing a method of manufacturing a lens according to an embodiment of the present disclosure.

### Detailed Description

According to the first aspect, the present disclosure provides a contact lens comprising a lens body. The lens body includes an optic zone, a peripheral zone circumscribing the optic zone, and a lens edge circumscribing the peripheral zone. The optic zone comprises a central region having a curvature that is centred on an optical axis. The central region has a distance corrective refractive power and a chord diameter of 2.7 mm plus or minus 0.04 mm. The optic zone comprises a first annular zone circumscribing the central region. The first annular zone is a myopic defocus zone having a refractive power that is more positive than the refractive power of the central region. The first annular zone has a curvature that is centred on the optical axis, and a radial width of 0.7 mm plus or minus 0.01 mm. The optic zone comprises a second annular zone circumscribing the first annular zone. The second annular zone is a distance corrective zone and has a curvature that is centred on the optical axis. The second annular zone has a radial width of 0.6 mm plus or minus 0.01 mm. The optic zone comprises a third annular zone circumscribing the second annular zone. The third annular zone is a myopic defocus zone having a refractive power that is more positive than the refractive power of the central region. The third annular zone has a curvature that is centred on the optical axis and a radial width of 0.8 mm plus or minus 0.015 mm. The central region comprises a fourth annular zone circumscribing the fourth annular zone. The fourth annular zone is a distance corrective zone having a curvature that is centred on the optical axis. The fourth annular zone has a radial width of 0.925 mm plus or minus 0.015 mm.

A contact lens according to the present disclosure includes a lens body. The lens body may be a polymeric unit that results from polymerisation of a contact lens formulation. Preferably, the lens body is a hydrogel material or a silicone hydrogel material, such that the contact lens is a hydrogel contact lens or a silicone hydrogel contact lens.

The lens body has an anterior surface, which, when the contact lens is worn by a lens wearer, is the front, or forward facing surface that is not in contact with the lens wearer's eye. The lens body has a posterior surface, which, when the contact lens is worn by a lens wearer, is the rear, or rearward facing surface that is in contact with the lens wearer's eye.

The lens body includes an optic zone. The optic zone may be substantially circular in shape. The optic zone may be oval in shape. The optic zone encompasses parts of the lens that have optical functionality. The optic zone is configured to be positioned over the pupil of an eye when in use. It may be that the optic zone has a diameter from 7.0 mm to 9.0 mm, for example, the optic zone may have a diameter of about 8.75 mm. Where a diameter value is described and/or claimed herein, unless otherwise stated, the diameter is understood to be the chord diameter. Where a diameter value is described and/or claimed herein for a circular, oval, or elliptical region, unless otherwise stated, the diameter is understood to be the average diameter of that region (i.e., the average of all the diameter values measured around the circumference for that region).

For lenses according to the present disclosure, the optic zone includes a central region and concentric annular zones extending radially outward from the central region. The optic zone is circumscribed by a peripheral zone. The peripheral zone circumscribes the outermost annular zone. The peripheral zone is not part of the optic zone, but sits outside the optic zone and above the iris when the lens is worn, and it provides mechanical functions, for example, increasing the size of the lens thereby making the lens easier to handle, providing ballasting to prevent rotation of the lens (in lenses for which that is required, e.g. toric lenses), and/or providing a shaped region that improves comfort for the lens wearer. Typically, a border can be seen at the junction of the optic zone and the peripheral zone. This border defines the optic zone perimeter. The lens body also has a lens edge circumscribing the peripheral zone. The lens edge is the junction of the anterior surface and the posterior surface of the lens body. The peripheral zone may extend to the edge of the contact lens.

A contact lens according to the present disclosure may include a ballast to orient the lens when positioned on the eye of a wearer. Lenses incorporating a ballast into the contact lens will, when placed on the eye of a wearer, rotate under the action of the wearer's eyelid to a predetermined angle of repose; for example, the ballast may be a wedge and the rotation may result from the action of the eyelid on the wedge. It is well-known in the art to ballast a contact lens to orient a contact lens; for example, toric contact lenses are ballasted to orient the lens so that the orthogonal cylindrical corrections provided by the lens align correctly for the astigmatism of the wearer's eye. In such an embodiment, the optic zone of the present contact lens may include a toric optic zone. For example, the front surface of the optic zone of the contact lens may include the central region and annular zones as described above, and the back surface of the optic zone may be toroidal and designed to provide astigmatic correction.

The contact lens may be substantially circular in shape and have a diameter from about 6 mm to about 20 mm.

The first optic axis may lie along the centreline of the lens. The first optical axis is defined with reference to a distant point source of light. Light from a distant point source that is on the optical axis of the lens (which may hereafter be referred to as an on-axis distant point source) will be focussed onto the optical axis of the lens.

The central region of the optic zone has a curvature that is centred on the optical axis. This may be referred to as an on-axis centre of curvature. The curvature may be a curvature of the anterior surface of the lens body, a curvature of the posterior surface of the lens body, or a curvature resulting from a combination of curvatures of the anterior and posterior surfaces of the lens body.

As a result of the on-axis centre of curvature, the central region focuses light from a distant point object, on the optical axis, to a spot on the optical axis at a distal focal surface. The term focal surface, as used herein, does not refer to a physical surface, but to a surface that could be drawn through points where light from distant objects would be focused. Such a surface is also referred to as an image plane (even though it can be a curved surface) or image shell. The eye focuses light onto the retina which is curved, and in a perfectly focused eye, the curvature of the image shell would match the curvature of the retina. Therefore, the eye does not focus light onto a flat mathematical plane. However, in the art, the curved surface of the retina is commonly referred to as a plane.

The central region may be substantially circular in shape. The central region has a diameter of 2.7 mm plus or minus 0.04 mm. The central region may be substantially oval in shape. The central region may be substantially elliptical in shape (i.e., having a substantially oval shape with two perpendicular lines of symmetry lying along its major and minor axes).

It has been found that this relatively small central region diameter provides an increased treatment area within the pupil for the lens wearer, and provides more myopic defocus towards the centre of the lens, rather than towards the periphery of the lens compared to known lenses for controlling myopia, whilst retaining adequate vision and accommodation for the lens wearer.

Lenses described herein have a central region having a curvature that is centred on an optical axis (i.e., on-axis centre of curvature), and concentric annular zones that also have a curvature centred on the optical axis. The power of the central region may be referred to herein as the distance corrective refractive power. Light from a distant point source that is on the optical axis of the lens (which may hereafter be referred to as an on-axis distant point source) that passes through the central region or a concentric annular zone will be focussed onto the optical axis of the lens.

The nominal power of the central region will correspond to the labelled refractive power of the contact lens as provided on the contact lens packaging (though in practice it may not have the same value). This will be the average power taken across the central region in the radial and circumferential directions. The measured power of the central region is the directly measured average power taken across the central region in the radial and circumferential directions. This may differ from the nominal power.

The distance corrective refractive power may be from +0.5 diopters (D) to -20.00 D, preferably between +0.5 and -15.0 D, more preferably between +0.5 and -6.0 D. The distance corrective refractive power corresponds to the refractive power necessary to correct the wearer's distance vision.

The optic zone comprises a first annular zone that circumscribes the central region.

For lens described herein, the first annular zone has a curvature that is centred on the optical axis. This curvature may be a curvature of the anterior surface of the lens body, the posterior surface of the lens body, or a combination of the anterior and posterior surfaces of the lens body.

The first annular zone is a myopic defocus zone having a refractive power that is more positive, or less negative, than the distance corrective refractive power of the central region. The power of the first myopic defocus zone may be +2.0 D more positive than the distance corrective refractive power of the central region. The power of the first myopic defocus zone may be +3.0 D more positive than the distance corrective refractive power of the central region. For example, if the central region has a distance corrective refractive power of -3.0 D, the refractive power of the first annular zone may be 0.0 D. Hereafter, the difference in power of the first annular zone and the central region may be referred to as an add power. The refractive power of the first annular zone will be the sum of the distance corrective refractive power and the add power. For example, for a lens having a distance corrective refractive power of -4.0 D and an add power of +3.0 D, the refractive power of the first annular zone will be -1.0 D.

The distance corrective refractive power of the central region may be negative, and the first annular zone may have a refractive power that is less negative than the power of the base region, or the first annular zone may have a positive refractive power. Considering the lens positioned on the cornea, if the refractive power of the first annular zone is less negative than the distance corrective refractive power, a focal surface of the first annular zone will be more anterior in the eye than the distal focal surface. Considering the lens when it is not positioned on the cornea, if the refractive power of the first annular zone is positive, a focal surface of the first annular zone will be on the opposite (image) side of the lens than a focal surface of the central region (which will be a virtual focal surface on the object side of the lens); if the refractive power of the first annular zone is negative (but less negative than the distance corrective refractive power), a virtual focal surface of the first annular zone will be further from the lens than a virtual focal surface of the central region.

The distance corrective refractive power of the central region may be positive, and the first annular zone may have a refractive power that is more positive than the distance corrective refractive power. In this case, a focal surface of the first annular zone will be closer to the lens than a focal surface of the central region. An on-axis image will not be formed on the lens wearer's retina by light passing through the first annular zone, unless they use the natural accommodation of their eye to bring nearby objects into focus.

It will be appreciated that similar considerations apply to the second, third, and fourth annular zones, with the second and fourth annular zones having a distance corrective refractive power that is less positive, or more negative than the refractive power of the first annular zone, and the third annular zone having a refractive power that is more positive, or less negative than the distance corrective refractive power of the central region.

The first annular zone circumscribes the central region. The first annular zone extends radially outwards from a perimeter of the central region. The first annular zone may have a substantially circular shape, a substantially oval shape, or a substantially elliptical shape. The first annular zone may fully surround the central region. The first annular zone may partially surround the central region. The first annular zone may abut the central region.

A blending region may be provided between the central region and the first annular zone. The blending region should not substantially affect the optics provided by the central region and the first annular zone. The blending region may have a radial width of between 0.03 mm and 0.08 mm. The blending region may have a radial width of 0.05 mm or less, although it may also be as wide as 0.2 mm, or as wide as 0.5 mm in some embodiments. The first annular zone has a radial width of 0.7 mm plus or minus 0.01 mm.

The optic zone comprises a second annular zone that circumscribes the first annular zone.

The second annular zone has a curvature that is centred on the optical axis. This curvature may be a curvature of the anterior surface of the lens body, the posterior surface of the lens body, or a combination of the anterior and posterior surfaces of the lens body.

The second annular zone is a distance corrective zone. The refractive power of the second annular zone is less positive, or more negative, than the refractive power of the first annular zone. The refractive power of the second annular zone may be the same as the distance corrective refractive power of the central region. Alternatively, the refractive power of the second annular zone may be different to the distance corrective power of the central region. The refractive power of the second annular zone may be more positive, or less negative than the distance corrective power of the central region, but less positive, or more negative than the refractive power of first annular zone. The refractive power of the second annular zone may be less positive, or more negative than the distance corrective power of the central region. The refractive power of the second annular zone may be between +0.5 D and -20.0 D, preferably between +0.5 D and -6.0 D.

The second annular zone circumscribes the first annular zone. The second annular zone extends radially outwards from a perimeter of the first annular zone. The second annular zone may have a substantially circular shape, a substantially oval shape, or a substantially elliptical shape. The second annular zone may fully surround the first annular zone. The second annular zone may partially surround the first annular zone. The second annular zone may abut the first annular zone.

A blending region may be provided between the first annular zone and the second annular zone. The blending region should not substantially affect the optics provided by the first annular zone and the second annular zone. The blending region may have a radial width of between 0.03 mm and 0.08 mm. The blending region may have a radial width of 0.05 mm or less, although it may also be as wide as 0.2 mm, or as wide as 0.5 mm in some embodiments. The second annular zone has a radial width of 0.6 mm plus or minus 0.01 mm.

The optic zone comprises a third annular zone that circumscribes the central region.

The third annular zone has a curvature that is centred on the optical axis. This curvature may be a curvature of the anterior surface of the lens body, the posterior surface of the lens body, or a combination of the anterior and posterior surfaces of the lens body.

The third annular zone is a myopic defocus zone having a refractive power that is more positive than the distance corrective refractive power of the central region. The refractive power of the third annular zone may be the same as the refractive power of the first annular zone. The refractive power of the third annular zone may be different to the refractive power of the first annular zone. The refractive power of the third annular zone may be more positive, or less negative than the refractive power of the first annular zone. The refractive power of the third annular zone may be less positive, or more negative, than the refractive power of the first annular zone, but will be more positive, or less negative than the distance corrective refractive power of the central region. The refractive power of the third annular zone may be +3.0 D more positive than the distance corrective refractive power of the central region. The refractive power of the third annular zone may be between +2 D and +8 D more positive than the distance corrective refractive power of the central region.

The third annular zone circumscribes the second annular zone. The third annular zone extends radially outwards from a perimeter of the second annular zone. The third annular zone may have a substantially circular shape, a substantially oval shape, or a substantially elliptical shape. The third annular zone may fully surround the second annular zone. The third annular zone may partially surround the second annular zone. The third annular zone may abut the second annular zone.

A blending region may be provided between the second annular zone and the third annular zone. The blending region should not substantially affect the optics provided by the second annular zone and the third annular zone. The blending region may have a radial width of between 0.03 mm and 0.08 mm. The blending region may have a radial width of 0.05 mm or less, although it may also be as wide as 0.2 mm, or as wide as 0.5 mm in some embodiments. The third annular zone has a radial width of 0.8 mm plus or minus 0.015 mm.

The optic zone comprises a fourth annular zone that circumscribes the third annular zone.

The fourth annular zone has a curvature that is centred on the optical axis. This curvature may be a curvature of the anterior surface of the lens body, the posterior surface of the lens body, or a combination of the anterior and posterior surfaces of the lens body.

The fourth annular zone is a distance corrective zone. The refractive power of the fourth annular zone will be less positive, or more negative, than the refractive power of the first annular zone. The refractive power of the fourth annular zone may be the same as the distance corrective refractive power of the central region. Alternatively, the refractive power of the fourth annular zone may be different to the distance corrective power of the central region. The refractive power of the fourth annular zone may be more positive, or less negative than the distance corrective power of the central region, but less positive, or more negative than the refractive power of the first annular zone. The refractive power of the fourth annular zone may be less positive, or more negative than the distance corrective power of the central region.

The fourth annular zone circumscribes the third annular zone. The fourth annular zone extends radially outwards from a perimeter of the third annular zone. The fourth annular zone may have a substantially circular shape or a substantially elliptical shape. It may fully surround the third annular zone. It may partially surround the third annular zone. The fourth annular zone may abut the third annular zone. A blending region may be provided between the third annular zone and the fourth annular zone. The blending region should not substantially affect the optics provided by the third annular zone and the fourth annular zone. The blending region may have a radial width of between 0.03 mm and 0.08 mm. The blending region may have a radial width of 0.05 mm or less, although it may also be as wide as 0.2 mm, or as wide as 0.5 mm in some embodiments. The fourth annular zone has a radial width of 0.925 mm plus or minus 0.015 mm.

It has been found that the radial widths of the first, second, third and fourth annular zones described and claimed herein, in combination with a central region having a 2.7 mm diameter provide a signal to slow the progression of myopia more effectively than for prior art coaxial myopic defocus contact lenses. The claimed central region diameter and radial widths of the first, second, third, and fourth annular zones described and claimed herein provide relatively more myopic defocus compared to prior art coaxial myopic defocus contact lenses, and provide more myopic defocus towards the centre of the lens, rather than towards the periphery of the lens, whilst still providing sufficiently clear distance vision to the wearer, and providing a consistent amount of myopic defocus as the pupil size of a lens wearer varies.

Preferably, the lens body comprises a hydrogel material or a silicone hydrogel material. As understood in the field of contact lenses, a hydrogel is a material that retains water in an equilibrium state and is free of a silicone-containing chemical. A silicone hydrogel is a hydrogel that includes a silicone-containing chemical. Hydrogel materials and silicone hydrogel materials, as described in the context of the present disclosure, have an equilibrium water content (EWC) of at least 10% to about 90% (wt/wt). The hydrogel material or silicone hydrogel material may have an EWC from about 30% to about 70% (wt/wt). Examples of suitable lens formulations include those having the following United States Adopted Names (USANs): methafilcon A, ocufilcon A, ocufilcon B, ocufilcon C, ocufilcon D, omafilcon A, omafilcon B, comfilcon A, enfilcon A, stenfilcon A, fanfilcon A, etafilcon A, senofilcon A, senofilcon B, senofilcon C, narafilcon A, narafilcon B, balafilcon A, samfilcon A, lotrafilcon A, lotrafilcon B, somofilcon A, riofilcon A, delefilcon A, verofilcon A, kalifilcon A, and the like.

The lens body of lenses according to the present disclosure may be a polymerised reaction product of a diluent-free contact lens formulation. For example, it may be that the present contact lens formulations do not include an organic solvent to help reduce phase separation of the different chemical compounds in the formulation or to help with processing of the contact lenses during their manufacture. A diluent is a non-reactive additive that is not incorporated into the contact lens body. Typically, diluents used in the manufacture of contact lenses are extractable from contact lens bodies after polymerisation, e.g. by washing with a 50:50 ethanol:water solution. A diluent-free formulation typically includes less than 3% (wt/wt), especially less than 1% (wt/wt) diluents. The formulation advantageously has less than 3% (wt/wt) organic solvents, especially less than 1% organic solvents.

The lens body of lenses according to the present disclosure may be a polymerised reaction product of a diluent-free contact lens formulation that includes at least seven different chemical compounds.

The formulation may include a compound of Formula 1 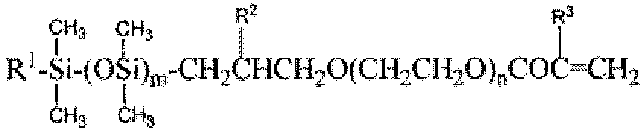 where m is an integer from 3 to 10, n is an integer from 0 to 10, R¹ is an alkyl group having 1 to 4 carbon atoms, R² is hydrogen or a methyl group, and R³ is hydrogen or a methyl group. In the present contact lenses, the compound of formula 1 can be a siloxane monomer where R¹ is a butyl group, R² is hydrogen, R³ is a methyl group, m is 4, and n is 1.

The contact lens formulation may also include a compound of Formula 2 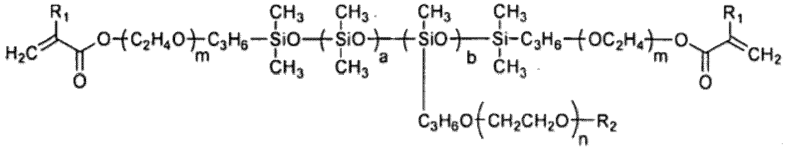 wherein R¹ is selected from either hydrogen or a methyl group; R² is selected from either hydrogen or a C 1-4 hydrocarbon group; m represents an integer of from 0 to 10; n represents an integer of from 4 up to about 15; a represents an integer from 60 to 100, b represents an integer from 1-10; and the configuration of siloxane units includes a random configuration. One specific example of the compound of formula 2 is a siloxane macromer wherein R¹ and R² are methyl groups, m is 0, n represents an integer from about 5 to about 10, a represents an integer of from about 70 to about 90, and b represent an integer of from 1 to about 10, for example from 4 to 8; this siloxane monomer has a molecular weight of about 8,000 to about 16,000 daltons.

The contact lens formulation may also include the following compounds:
a compound of Formula 3 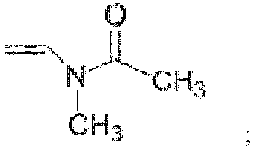
a compound of Formula 4 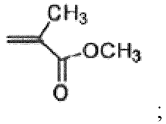
a compound of Formula 5 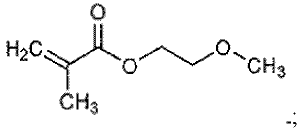
a compound of Formula 6 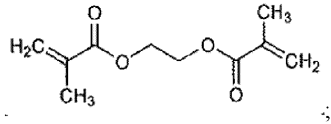 and
a compound of Formula 7

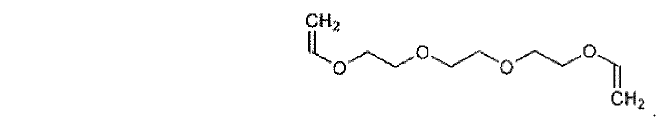

In the compound of Formula 1, R¹ may be a butyl group, R² may be hydrogen, R³ may be a methyl group, m may be 4, and n may be 1; and in the compound of Formula 2, R¹ and R² may be methyl groups, m may be 0, n may represent an integer from about 5 to about 10, a may represent an integer of from about 70 to about 90, and b may represent an integer of from 1 to about 10, for example from 4 to 8, and the compound of Formula 2 may have a molecular weight of about 8,000 to about 16,000 daltons.

The present contact lenses may also include an ultraviolet light filter or absorber. The ultraviolet light filter may include at least one benzotriazole-containing ultraviolet filter. The ultraviolet light filter may be 2-[3-(2H-benzotriazol-yl)-4-hydroxyphenyl] ethyl methacrylate. The ultraviolet light filter may be a benzophenone-containing compound. The contact lens may include a combination of a benzotriazole-containing ultraviolet filter and a benzophenone-containing ultraviolet filter.

The contact lens formulation may also include 2-(allyloxy)ethanol, 1,4-bis[4-(2-methacryloxyethyl) phenylamino]-9,10-anthraquinone, and triphenylphosphine.

The contact lens formulation may be free of phosphorylcholine monomers.

In the manufacture of contact lenses, it can be desirable to control the dimensions of the lens edge. The shape of the lens edge region can influence the comfort of contact lenses. Thus, in the present contact lenses, the lens edge has an edge thickness that contributes to a comfortable wearing experience for the person. To help ensure desired quality control, the edge thickness is measured at a specified distance from the actual lens edge. Thus, as an example, the present contact lenses may have an edge thickness that is less than 0.10 mm when measured at a radial distance 0.10 mm from the lens edge (i.e., from the lens edge towards the geometric center of the contact lens body). The lens edge thickness may be less than 0.08 mm at a radial distance 0.10 mm from the lens edge. The lens edge thickness may be less than 0.08 mm at a radial distance 0.07 mm from the lens edge. And, still further, the lens may have a lens edge thickness less than 0.05 mm at a radial distance 0.07 mm from the lens edge.

The present contact lenses have a center thickness. The center thickness is measured at the geometric center of the contact lens, or at the geometric center of the optic zone. The center thickness can be determined using conventional techniques, such as by visually measuring the distance from the anterior surface to the posterior surface of the lens body at the geometric center of the lens. Alternately, the center thickness can be determined based on design specification targets. The present contact lenses may have a center thickness from 0.06 mm to 0.20 mm, for example when determined visually on a sectioned lens.

In addition, the present contact lenses may have a peripheral junction thickness. The peripheral junction corresponds to the junction between the peripheral zone and the ramp surface extending from the lens edge to the peripheral zone. In the present case, the peripheral junction is located about 0.5 mm to 0.9 mm from the lens edge. The present contact lenses may have a peripheral junction thickness from 0.15 mm to 0.25 mm. The peripheral junction thickness and the center thickness can be important features in the design of the optics of the contact lens. For example, one may set the peripheral junction thickness at a set target value, and set the center thickness at a set target value, and then adjust the curvature of the anterior surface of the contact lens to provide the desired refractive power with those two fixed points.

In the present contact lenses, the rate of power change between any two zones within the optic zone may be relatively steep. The rate of the refractive power change at the junction between two adjacent zones, such as the central region and the first myopic defocus zone, may be at least 6 D/mm when measured at a resolution of less than 0.09 mm. The rate of power change can be determined using optical inspection instruments available from Optocraft or Lambda-X Ophthalmics. Examples include the SHS wavefront sensor and the NIMO wavefront sensor.

The present contact lenses may have a central region that is free of a defocus zone. In other words, the central region consists of a single effective refractive power to correct the distance vision of the wearer, wherein the refractive power is substantially constant across the entire central region, including the geometric center of the central region.

The present contact lenses may be free of lenslets or smaller lenses provided on a surface of the contact lens. Thus, the present annual zones can be considered to be continuous rings providing either myopic defocus or distance correction.

The present disclosure also provides methods of manufacturing the contact lenses. The method includes forming a contact lens, wherein the lens comprises a lens body including an optic zone, a peripheral zone circumscribing the optic zone, and a lens edge circumscribing the peripheral zone. The optic zone comprises a central region having a curvature that is centred on an optical axis. The central region has a distance corrective refractive power and a chord diameter of 2.7 mm plus or minus 0.04 mm. The optic zone comprises a first annular zone circumscribing the central region. The first annular zone is a myopic defocus zone having a refractive power that is more positive than the refractive power of the central region. The first annular zone has a curvature that is centred on the optical axis, and a radial width of 0.7 mm plus or minus 0.01 mm. The optic zone comprises a second annular zone circumscribing the first annular zone. The second annular zone is a distance corrective zone and has a curvature that is centred on the optical axis. The second annular zone has a radial width of 0.6 mm plus or minus 0.01 mm. The optic zone comprises a third annular zone circumscribing the second annular zone. The third annular zone is a myopic defocus zone having a refractive power that is more positive than the refractive power of the central region. The third annular zone has a curvature that is centred on the optical axis and a radial width of 0.8 mm plus or minus 0.015 mm. The central region comprises a fourth annular zone circumscribing the third annular zone. The fourth annular zone is a distance corrective zone having a curvature that is centred on the optical axis. The fourth annular zone has a radial width of 0.925 mm plus or minus 0.015 mm.

The lens may include any of the features set out in respect of the first aspect above.

The contact lens may be a molded contact lens. The lens can be formed by cast molding processes, spin cast molding processes, or lathing processes, or a combination thereof. As understood by persons skilled in the art, cast molding refers to the molding of a lens by placing a lens forming material between a female mold member having a concave lens member forming surface, and a male mold member having a convex lens member forming surface.

The method may include steps of: placing the contact lens formulation onto a concave molding surface of a first contact lens mold member, wherein the concave molding surface includes a molding region that corresponds to the optic zone; placing a second contact lens mold member in contact with the first contact lens mold member to form a contact lens mold assembly; polymerising the contact lens formulation in the contact lens mold assembly to form a polymerised contact lens; removing the polymerised contact lens from the contact lens mold assembly to produce a separated contact lens; and packaging the separated contact lens in a contact lens package. The polymerised lens may also optionally be washed using solvents and/or water to remove unreacted chemical compounds. Such a washing step may, for example, be carried out concurrently with the step of removing the polymerised contact lens from the mold assembly. Alternatively or additionally, the washing step may be carried out on the separated lens subsequent to the removing step.

In a third aspect of the disclosure not according to the claimed invention there is also provided a method of using the contact lens described herein. The methods may be effective in reducing progression of a refractive error, such as reducing the progression of myopia. When the present lenses are used to reduce the progression of myopia, the methods include a step of providing the contact lenses to a wearer whose eyes are able to accommodate for varying near distances (e.g., in a range of from about 15 cm to about 40 cm). The method may include a step of providing the ophthalmic lenses to a person that is from about 5 years old to about 25 years old. The providing can be performed by an eye care practitioner, such as an optician or optometrist. Alternatively, the providing can be performed by a lens distributor that arranges for the delivery of the ophthalmic lenses to the lens wearer.

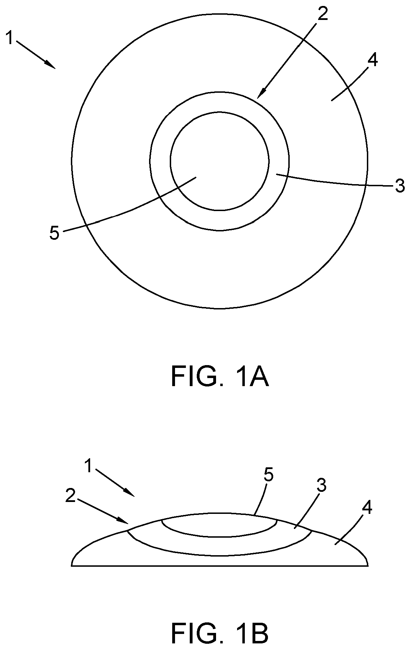

FIGS. 1A and 1B show a schematic top view and side review respectively of a known lens for use in the slowing progression of myopia (e.g., myopia control). The lens 1 comprises an optic zone 2, which approximately covers the pupil, and a peripheral zone 4 that sits over the iris. The peripheral zone 4 provides mechanical functions, including increasing the size of the lens thereby making the lens 1 easier to handle, in some examples providing ballasting to prevent rotation of the lens 1 (for example in toric lenses), and providing a shaped region that improves comfort for the lens 1 wearer. The optic zone 2 provides the optical functionality of the lens 1, and the optic zone comprises an annular region 3 and a central region 5. The central region 5 is a distance corrective region. The central region has a diameter of about 3.35 mm. The annular region 3 is a myopic defocus region and has a greater refractive power than the central region 5. The annular region 3 has an add power of +2.0 D compared to the central region.

For the purposes of simplicity, the lens 1 shown in FIGS. 1A and 1B has a single central region 5 and a single annular region 3. It will be appreciated that similar known lenses include a plurality of concentric annular myopic defocus regions, each having a greater refractive power than the central region. Additional annular myopic defocus regions may be separated by distance corrective regions providing the same power as the central region.

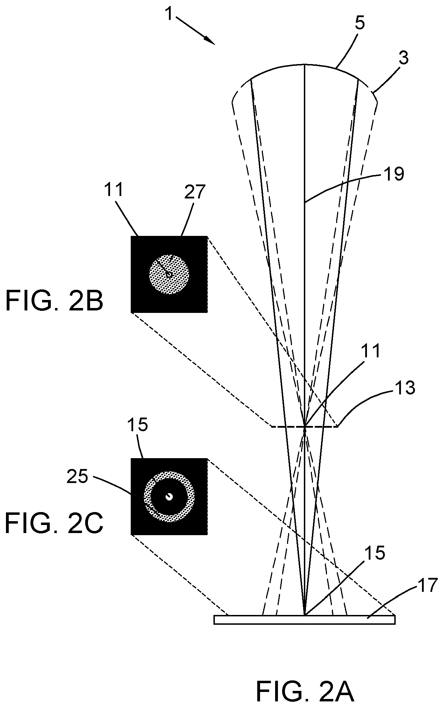

FIG. 2A is a schematic ray diagram showing how the known lens 1 of Fig. 1A-1B focuses light when the lens 1 is positioned on an eye. The focus 11 of the annular region 3 lies on a proximal focal surface 13, and the focus 15 for the central region 5 lies on a distal focal surface 17, which is further away from the posterior surface of the lens 1. The central region 5 has a curvature that is centred on an optical axis 19. The annular region 3 has a greater curvature (and hence a smaller radius of curvature) than the central region 5. The curvature of the annular region 3 is also centred on the optical axis 19. The focus 11 of the annular region 3 and the focus 15 of the central region 5 therefore share a common optical axis 19. As shown in FIGS. 2B and 2C, for an on-axis point source in the far field, light rays focused by the central region 5 form the focus 15 at the distal focal surface 17, but light rays focused by the central region 5 also produce an unfocused blur spot 27 at the proximal focal surface 13. Similarly, light rays focused by the annular region 3 form the focus 11 at the proximal focal surface 13, but light rays focused by the annular region 3 diverge after the proximal focal surface 13, and the diverging light rays produce an unfocused annulus 25 at the distal focal surface 17. As discussed above, the unfocused annulus image 25 may result in wearers of the lens 1 seeing a 'halo' around focused distance images.

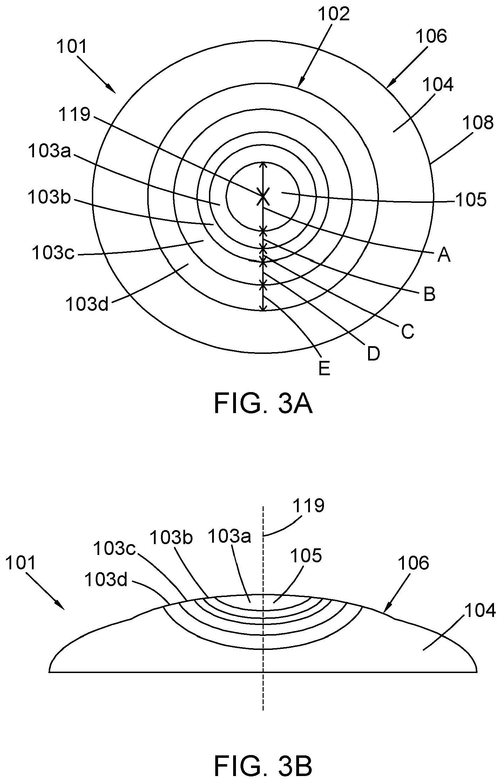

FIG. 3A shows a schematic top view of a contact lens 101 according to an embodiment of the present disclosure. FIG. 3B is a schematic side view of the lens 101 shown in FIG. 3A. The lens 101 comprises a lens body 106. The lens body 106 includes an optic zone 102 which approximately covers the pupil, a peripheral zone 104 that circumscribes the optic zone 102 and sits over the iris. The peripheral zone 104 provides mechanical functions, including increasing the size of the lens thereby making the lens 101 easier to handle, and in some examples providing ballasting to prevent rotation of the lens 101 (for example in toric lenses), and providing a shaped region that improves comfort for the lens 101 wearer. A lens edge 108 circumscribes the peripheral zone. The optic zone 102 provides the optical functionality of the lens 101. The optic zone 102 comprises a central region 105. The central region 105 is a distance corrective region and has a curvature that is centred on an optical axis 119, indicated by the letter 'X' in FIG. 3A and the dashed line in FIG. 3B. The distance corrective refractive power of the central region 105 is selected to correct the distance vision of the patient, and for this example lens 101 it is -3.0 D. The focus of the central region 105 is at a distal focal surface (not shown). The central region has a diameter of 2.7 mm plus or minus 0.04 mm, indicated by the letter 'A' in FIG. 3A.

A first annular zone 103a circumscribes the central region 105. The first annular zone 103a is a myopic defocus zone. The first annular zone 103a has a curvature that is centred on the same optical axis 119 as the central region 105, i.e., they share a common optical axis 119. The first annular zone 103a has a greater curvature, i.e., a smaller radius of curvature than the central region 105, and provides a refractive power that is +3.0 D greater than the refractive power of the central region 105. In other words, the add power of the first annular zone 103a is +3.0 D, and in this example, the refractive power of the first annular zone 103a is 0.0 D. The focus of the first annular zone 103a lies on a proximal focal surface (not shown), which is closer to the posterior surface of the lens 101 than the distal focal surface (not shown). The first annular zone has a radial width of 0.7 mm plus or minus 0.01 mm, indicated by the letter 'B' in FIG. 3A.

A second annular zone 103b circumscribes the first annular zone 103a. The second annular zone 103b is a distance corrective zone. The second annular zone 103b has a curvature that is centred on the same optical axis 119 as the central region 105 and the first annular zone 103a, i.e., they share a common optical axis 119. The second annular zone 103b has the same curvature, i.e., the same radius of curvature as the central region 105, and, in this example, provides a distance corrective refractive power of -3.0 D. The focus of the second annular zone 103b lies at the distal focal surface (not shown). The second annular zone has a radial width of 0.6 mm plus or minus 0.01 mm, indicated by the letter 'C' in FIG. 3A.

A third annular zone 103c circumscribes the second annular zone 103b. The third annular zone 103c is a myopic defocus zone. The third annular zone 103c has a curvature that is centred on the same optical axis 119 as the central region 105 and the first annular zone 103a, i.e., they share a common optical axis 119. The third annular zone 103c has the same curvature, i.e., the same radius of curvature as the first annular zone 103a. This curvature provides a refractive power that is +3.0 D greater than the refractive power of the central region 105. In other words, the add power of the third annular zone 103c is +3.0 D, and so the refractive power of the first annular zone 103c is 0.0 D. The focus of the first annular zone 103a lies on the proximal focal surface (not shown), which is closer to the posterior surface of the lens 101 than the distal focal surface (not shown). The third annular zone 103c has a radial width of 0.8 mm plus or minus 0.015 mm, indicated by the letter 'D' in FIG. 3A.

A fourth annular zone 103d circumscribes the third annular zone 103c. The fourth annular zone is a distance corrective zone. The fourth annular zone 103d has a curvature that is centred on the same optical axis 119 as the central region 105 and the first annular zone 103a, i.e., they share a common optical axis 119. The fourth annular zone 103d has the same curvature, i.e., the same radius of curvature as the central region 105, and provides a distance corrective refractive power of -3.0 D. The focus of the fourth annular zone 103b lies at the distal focal surface (not shown). The fourth annular zone 103d has a radial width of 0.925 mm plus or minus 0.015 mm, indicated by the letter 'E' in FIG. 3A.

Compared to known lenses for use in slowing the progression of myopia, for example, the lens 1 shown and described in FIGS. 1A-3C and the description above related thereto, the lens 101 shown in FIGS. 3A and 3B and described above has a relatively small central region 105 diameter, relatively wide myopic defocus zones, and relatively narrow distance corrective zones.

Compared to known lenses for slowing the progression of myopia, when a lens according to the present disclosure (such as the lens 101 of FIGS. 3A and 3B) is worn by a lens wearer, a relatively large proportion of the lens wearer's pupil will be covered by a myopic defocus zone 103a, 103c, and more myopic defocus will be provided towards the centre of the lens than towards the periphery of the lens. This has been found to be effective in slowing the progression of myopia.

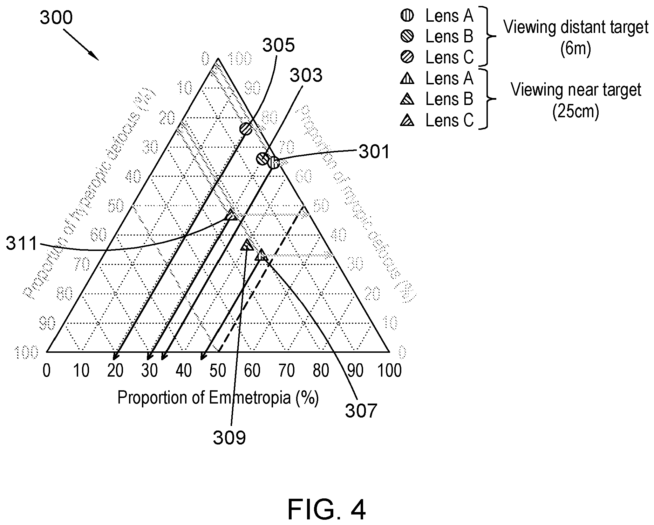

FIG. 4 is a plot 300 showing the proportion of light arriving at a lens wearer's retina that is myopically defocused (i.e., focused at a point in front of the retina), hyperopically defocused (i.e., focused at a point that is behind the retina), and emmetropic (i.e., focused at the lens wearer's retina), for three different lenses (Lens A, Lens B and Lens C), used in the treatment of myopia. The proportions shown in FIG. 4 are for a lens wearer with a fully dilated pupil. Lens A is a known lens for use in the treatment of myopia. The central region provides a distance corrective refractive power and has a diameter of 3.35 mm, as described above. The lens includes two concentric annular regions, each providing an add power of +2.0 D. The two concentric annular regions are separated by an annular region providing the distance corrective refractive power. Lens B is similar to lens A, having a central region providing a distance corrective refractive power and a diameter of 3.35 mm. The lens includes two concentric annular regions, and in this case each annular region provides an add power of +3.0 D. The two concentric annular regions are separated by an annular region providing the distance corrective refractive power. Lens C is the lens 101 shown and described in FIGS. 3A and 3B i.e., it is a lens according to the present disclosure. The central region provides a distance corrective refractive power and has a central region diameter of 2.7 mm.

The circular data points 301 (Lens A), 303 (Lens B), 305 (Lens C), show the proportion of light arriving at a lens wearer's retina when the lenses are being used for distant target viewing at a distance of 6 m. The triangular data points 307 (Lens A), 309 (Lens B), 311 (Lens C), show the proportion of light arriving at a lens wearer's retina when the lenses are being used for near target viewing at a distance of 25 cm.

As shown in FIG. 4, Lens C, which is a lens according to the present disclosure and has a 2.7 mm central region diameter, results in a larger proportion of light arriving at the lens wearer's retina being myopically defocused light, compared to Lens A and Lens B, which have a larger diameter of 3.35 mm. This is the case for lens wearer's viewing distant targets (circular symbols) and near targets (triangular symbols).

Reducing the diameter of the central region from 3.35 mm to 2.7 mm results in a relatively large increase in the proportion of myopically defocused light arriving at the lens wearer's retina (as shown by comparing Lens A and Lens B to Lens C). This is the case for lens wearer's viewing distant targets (circular symbols) and near targets (triangular symbols). In contrast, increasing the add power from +2.0 D to +3.0 D results in a relatively small increase in the proportion of myopically defocused light arriving at the lens wearer's retina. This can be seen by comparing Lens A to Lens B). Again, this is the case for lens wearer's viewing distant targets (circular symbols) and near targets (triangular symbols).

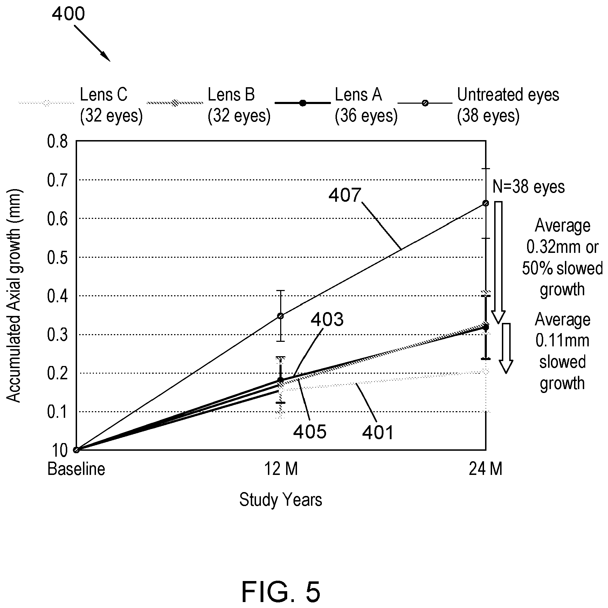

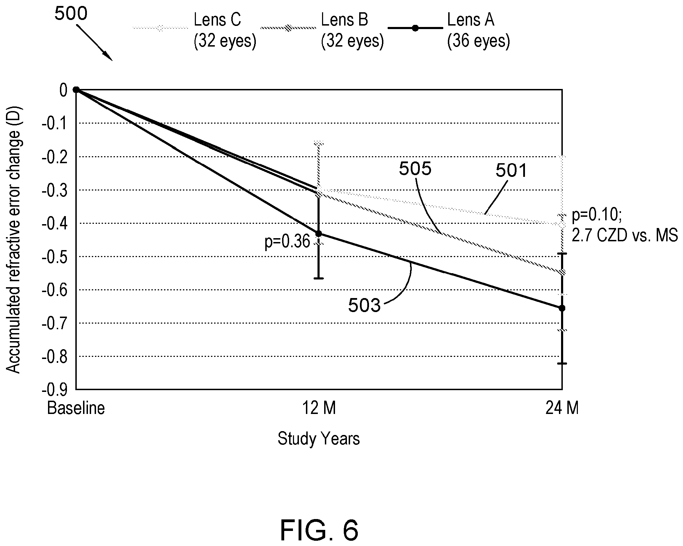

Lenses according to the present disclosure, such as Lens C shown in FIG. 4, which have a relatively small central region diameter of 2.7 mm, relatively wide myopic defocus zones, and relatively narrow distance corrective zones, provide a relatively large proportion of myopically defocused light at the lens wearer's retina, and a relatively large proportion of myopically defocused light towards the central region of the retina as opposed to the peripheral region of the retina. This has been found to be particularly effective in slowing the progression of myopia, as demonstrated in FIGS. 5 and 6 below.

FIG. 5 is a plot 400 showing axial eye growth (i.e., progression of myopia) as a function of time for lens wearer's wearing different lenses for slowing the progression of myopia (Lens A, Lens B, and Lens C, as described above in relation to FIG. 4).

For the first 12 months of the study, all participants, apart from the untreated eyes group wore Lens A lenses. After 12 months, all participants wearing Lens A type lenses were randomly assigned Lens A, Lens B or Lens C lenses.

As shown in FIG. 5, after 24 months, lens wearer's wearing either Lens A or Lens B (indicated by the curves 403 and 405 respectively) showed 50% or 0.32 mm slower axial eye growth compared to untreated lens wearer's (indicated by curve 407). After 24 months, lens wearers wearing Lens C (curve 401), which is a lens according to the present disclosure having a relatively small central zone diameter of 2.7 mm, showed on average, 0.11 mm less axial growth (indicated by the curve 401) compared to lens wearer's wearing Lens A (curve 403) or Lens B (curve 405). In contrast, lens wearers wearing Lens B (curve 405), which has the same a central region diameter of 3.35 mm as Lens A (curve 403), but a higher add power of +3.0 D, compared to Lens A (403), did not exhibit significantly slower axial growth over the 24 month period. This indicates that lenses according to the present disclosure, such as Lens C, that have a relatively small central region diameter of 2.7 mm, are particularly effective in slowing axial growth and therefore slowing myopia progression.

FIG. 6 is a plot 500 showing accumulated refractive error change as a function of time for lens wearer's wearing different lenses for slowing the progression of myopia (Lens A, Lens B and Lens C, as described above in relation to FIG. 4).

For the first 12 months of the study, all participants, apart from the untreated eyes group wore Lens A lenses. After 12 months, the Lens A lens wearers were randomly assigned Lens A, Lens B or Lens C lenses.

As shown in FIG. 6, after 24 months, lens wearer's wearing Lens C, which is a lens according to the present disclosure having a relatively small central zone diameter of 2.7 mm, exhibit a significantly smaller refractive error change (as indicated by curve 501) compared to lens wearer's wearing Lens A (indicated by curve 503) or Lens B (indicated by curve 505). Lens wearer's wearing Lens B (curve 505), which has the same a central region diameter of 3.35 mm as Lens A, but a higher add power of +3.0 D, compared to Lens A, exhibit a smaller refractive error change than those wearing Lens A (curve 503), but a larger refractive error change than those wearing Lens C (curve 501). This indicates that lenses according to the present disclosure that have a relatively small central region diameter of 2.7 mm, such as Lens C (curve 501), are particularly effective in slowing myopia progression.

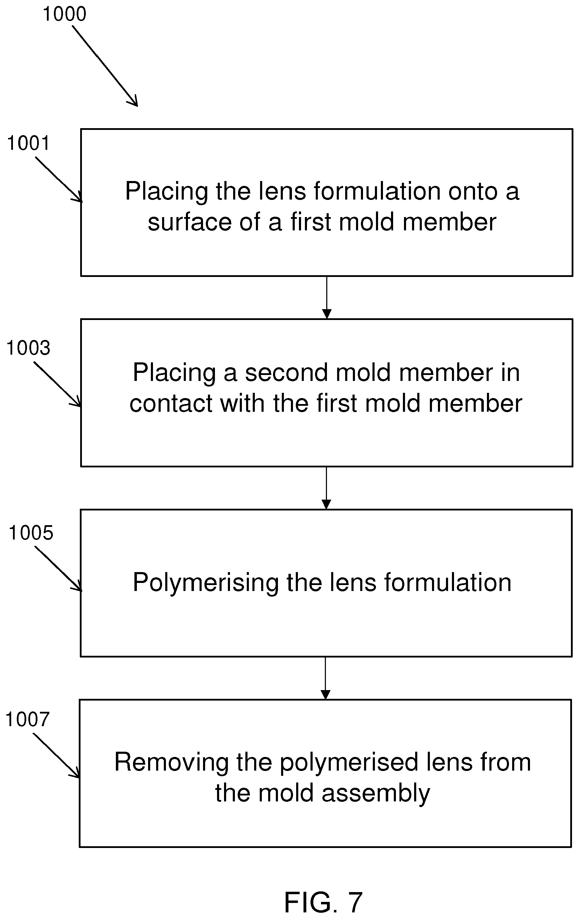

FIG. 7 is a flowchart showing a method 1000 of manufacturing a contact lens, according to an embodiment of the present disclosure. In a first step 1001 the contact lens formulation is placed onto a concave molding surface of a first contact lens mold member, wherein the concave molding surface includes a molding region that corresponds to the optic zone and the peripheral zone. In a second step 1003, a second contact lens mold member is placed in contact with the first contact lens mold member to form a contact lens mold assembly. In a third step 1005, the contact lens formulation in the contact lens mold assembly is polymerised to form a polymerised contact lens. In a fourth step 1007, the polymerised contact lens is removed from the contact lens mold assembly to produce a separated contact lens. The resulting contact lens is a lens body. The lens body includes an optic zone, a peripheral zone circumscribing the optic zone, and a lens edge circumscribing the peripheral zone. The optic zone comprises a central region having a curvature that is centred on an optical axis. The central region has a distance corrective refractive power and a chord diameter of 2.7 mm plus or minus 0.04 mm. The optic zone comprises a first annular zone circumscribing the central region. The first annular zone is a myopic defocus zone having a refractive power that is +3.0 D more positive than the refractive power of the central region. The first annular zone has a curvature that is centred on the optical axis, and a radial width of 0.7 mm plus or minus 0.01 mm. The optic zone comprises a second annular zone circumscribing the first annular zone. The second annular zone is a distance corrective zone and has a curvature that is centred on the optical axis. The second annular zone has a radial width of 0.6 mm plus or minus 0.01 mm. The optic zone comprises a third annular zone circumscribing the second annular zone. The third annular zone is a myopic defocus zone having a refractive power that is more positive than the refractive power of the central region. The third annular zone has a curvature that is centred on the optical axis and a radial width of 0.8 mm plus or minus 0.015 mm. The optic zone comprises a fourth annular zone circumscribing the fourth annular zone. The fourth annular zone is a distance corrective zone having a curvature that is centred on the optical axis. The fourth annular zone has a radial width of 0.925 mm plus or minus 0.015 mm.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In example embodiments of the present disclosure, the second and fourth annular zones provide the same distance corrective refractive power as the central region. In other embodiments, the second and fourth annular zones may each provide a different distance corrective refractive power, and this power may be different to the distance corrective refractive power of the central region. In example embodiments of the present disclosure, the first and third annular zone provide the same add power that is more positive, or less negative than the distance corrective refractive power of the central region. In other embodiments, the third annular zone may provide a different add power to the first annular zone.

## Claims

1. A contact lens (101), the lens (101) comprising a lens body (106), and the lens body (106) including an optic zone (102), a peripheral zone (104) circumscribing the optic zone (102), and a lens edge (108) circumscribing the peripheral zone (104), the optic zone (102) comprising:
a central region (105), the central region (105) having a curvature that is centred on an optical axis (119), wherein the central region (105) has a distance corrective refractive power and a chord diameter of 2.7 mm plus or minus 0.04 mm; and
a first annular zone (103a) circumscribing the central region (105), wherein the first annular zone (103a) is a myopic defocus zone having a refractive power that is more positive than the refractive power of the central region (105), wherein the first annular zone (103a) has a curvature that is centred on the optical axis (119), and a radial width of 0.7 mm plus or minus 0.01 mm;
a second annular zone (103b) circumscribing the first annular zone (103a), wherein the second annular zone (103b) is a distance corrective zone and has a curvature that is centred on the optical axis (119), wherein the second annular zone (103b) has a radial width of 0.6 mm plus or minus 0.01 mm; and
a third annular zone (103c) circumscribing the second annular zone (103b), wherein the third annular zone (103c) is a myopic defocus zone having a refractive power that is more positive than the refractive power of the central region (105), wherein the third annular zone (103c) has a curvature that is centred on the optical axis (119), and a radial width of 0.8 mm plus or minus 0.015 mm; and
a fourth annular zone (103d) circumscribing the third annular zone (103c), wherein the fourth annular zone (103d) is a distance corrective zone having a curvature that is centred on the first optical axis (119), wherein the fourth annular zone has a radial width of 0.925 mm plus or minus 0.015 mm.

2. The contact lens (101) according to claim 1, wherein the first annular zone (103a) has a refractive power that is +3.0 D more positive than the distance corrective refractive power of the central region (105).

3. The contact lens (101) according to claim 1, wherein the first annular zone (103a) has a refractive power that is +2.0 D more positive than the distance corrective refractive power of the central region (105).

4. The contact lens (101) according to claim 1 or claim 2, wherein the third annular zone (103c) has a refractive power that is +3.0 D more positive than the distance corrective refractive power of the central region (105).

5. The contact lens (101) according to any preceding claim, wherein the third annular zone (103c) has a refractive power that is more positive than the distance corrective power of the central region (105), and is different from the refractive power of the first annular zone (103a).

6. The contact lens (101) according to any of claims 1 to 3, wherein the third annular zone (103c) has a refractive power that is +2.0 D more positive than the distance corrective refractive power of the central region (105).

7. The contact lens (101) according to any preceding claim, wherein the distance corrective refractive power is between +0.5 D and -20.0 D, optionally, wherein the distance corrective refractive power is between +0.5 D and -6.0 D.

8. The contact lens according to any preceding claim, wherein the second annular zone (103b) has the same refractive power as the distance corrective refractive power of the central region (105).

9. The contact lens (101) according to any preceding claim, wherein the fourth annular zone (103d) has the same refractive power as the distance corrective refractive power of the central region (105).

10. The contact lens (101) according to any preceding claim, wherein the lens body (106) comprises a hydrogel material, or a silicone hydrogel material.

11. The contact lens (101) according to any preceding claim, wherein the lens edge has an edge thickness less than 0.10 mm measured at a radial distance 0.10 mm from the lens edge, optionally, wherein the lens edge thickness is less than 0.08 mm at a radial distance 0.10 mm from the lens edge, optionally, wherein the lens edge thickness is less than 0.08 mm at a radial distance 0.07 mm from the lens edge, optionally, wherein the lens edge thickness is less than 0.05 mm at a radial distance 0.07 mm from the lens edge.

12. The contact lens (101) according to any preceding claim, wherein contact lens (101) has a center thickness from 0.06 mm to 0.20 mm.

13. The contact lens (101) according to any preceding claim, having a rate of refractive power change at the junction between any two adjacent zones in the optic zone (102) is at least 6 D/mm when measured at a resolution of less than 0.09 mm.

14. A method (1000) of manufacturing a contact lens (101) according to any preceding claim, the method (1000) comprising:
forming a contact lens (101), wherein the lens (101) comprises a lens body (106) including an optic zone (102), a peripheral zone (104) circumscribing the optic zone (102), and a lens edge circumscribing the peripheral zone (104), the optic zone (102) comprising:
a central region (105), the central region (105) having a curvature that is centred on an optical axis (119), wherein the central region (105) has a distance corrective refractive power and a chord diameter of 2.7 mm plus or minus 0.04 mm; and
a first annular zone (103a) circumscribing the central region (105), wherein the first annular zone (103a) is a myopic defocus zone having a refractive power that is more positive than the refractive power of the central region (105), wherein the first annular zone (103a) has a curvature that is centred on the optical axis (119), and a radial width of 0.7 mm plus or minus 0.01 mm;
a second annular zone (103b) circumscribing the first annular zone (103a), wherein the second annular zone (103b) is a distance corrective zone and has a curvature that is centred on the optical axis (119), wherein the second annular zone (103b) has a radial width of 0.6 mm plus or minus 0.01 mm; and
a third annular zone (103c) circumscribing the second annular zone (103b), wherein the third annular zone (103c) is a myopic defocus zone having a refractive power that is more positive than the refractive power of the central region (105), wherein the third annular zone (103c) has a curvature that is centred on the optical axis (119), and a radial width of 0.8 mm plus or minus 0.015 mm; and
a fourth annular zone (103d) circumscribing the third annular zone (103c), wherein the fourth annular zone (103d) is a distance corrective zone having a curvature that is centred on the first optical axis (119), wherein the fourth annular zone (103d) has a radial width of 0.925 mm plus or minus 0.015 mm.

15. A method of manufacturing a contact lens (101) according to claim 14, wherein the lens (101) is formed using a lathing process.

16. A method (1000) of manufacturing a contact lens (101) according to claim 14, the method (1000) further comprising:
placing the contact lens formulation onto a concave molding surface of a first contact lens mold member (1001), wherein the concave molding surface includes a molding region that corresponds to the optic zone;
placing a second contact lens mold member in contact with the first contact lens mold member (1003) to form a contact lens mold assembly;
polymerising the contact lens formulation (1005) in the contact lens mold assembly to form a polymerised contact lens;
removing the polymerised contact lens from the contact lens mold assembly (1007) to produce a separated contact lens; and
packaging the separated contact lens in a contact lens package.

## Patentansprüche

1. Eine Kontaktlinse (101), wobei die Linse (101) einen Linsenkörper (106) aufweist und der Linsenkörper (106) eine optische Zone (102), eine die optische Zone (102) umgebende periphere Zone (104) und einen die periphere Zone (104) umgebenden Linsenrand (108) aufweist, wobei die optische Zone (102) aufweist:
einen zentralen Bereich (105), wobei der zentrale Bereich (105) eine Krümmung aufweist, die auf einer optischen Achse (119) zentriert ist, wobei der zentrale Bereich (105) eine distanzkorrigierende Refraktionskraft und einen Sehnen-Durchmesser von 2,7 mm plus oder minus 0,04 mm aufweist; und
eine erste ringförmige Zone (103a), die den zentralen Bereich (105) umgibt, wobei die erste ringförmige Zone (103a) eine myopische Defokussierungszone mit einer Refraktionskraft ist, die positiver ist als die Refraktionskraft des zentralen Bereichs (105), wobei die erste ringförmige Zone (103a) eine Krümmung aufweist, die auf der optischen Achse (119) zentriert ist, und eine radiale Breite von 0,7 mm plus oder minus 0,01 mm aufweist;
eine zweite ringförmige Zone (103b), die die erste ringförmige Zone (103a) umgibt, wobei die zweite ringförmige Zone (103b) eine Distanzkorrekturzone ist und eine Krümmung aufweist, die auf der optischen Achse (119) zentriert ist, wobei die zweite ringförmige Zone (103b) eine radiale Breite von 0,6 mm plus oder minus 0,01 mm aufweist; und
eine dritte ringförmige Zone (103c), die die zweite ringförmige Zone (103b) umgibt, wobei die dritte ringförmige Zone (103c) eine myopische Defokussierungszone ist, die eine Refraktionskraft aufweist, die positiver ist als die Refraktionskraft des zentralen Bereichs (105), wobei die dritte ringförmige Zone (103c) eine Krümmung aufweist, die auf der optischen Achse (119) zentriert ist, und eine radiale Breite von 0,8 mm plus oder minus 0,015 mm aufweist; und
eine vierte ringförmige Zone (103d), die die dritte ringförmige Zone (103c) umgibt, wobei die vierte ringförmige Zone (103d) eine Distanzkorrekturzone mit einer Krümmung ist, die auf der ersten optischen Achse (119) zentriert ist, wobei die vierte ringförmige Zone eine radiale Breite von 0,925 mm plus oder minus 0,015 mm aufweist.

2. Die Kontaktlinse (101) gemäß Anspruch 1, wobei die erste ringförmige Zone (103a) eine Refraktionskraft aufweist, die um +3,0 D positiver ist als die distanzkorrigierende Refraktionskraft des zentralen Bereichs (105).

3. Die Kontaktlinse (101) gemäß Anspruch 1, wobei die erste ringförmige Zone (103a) eine Refraktionskraft aufweist, die um +2,0 D positiver ist als die distanzkorrigierende Refraktionskraft des zentralen Bereichs (105).

4. Die Kontaktlinse (101) gemäß Anspruch 1 oder Anspruch 2, wobei die dritte ringförmige Zone (103c) eine Refraktionskraft aufweist, die um +3,0 D positiver ist als die distanzkorrigierende Refraktionskraft des zentralen Bereichs (105).

5. Die Kontaktlinse (101) gemäß einem der vorstehenden Ansprüche, wobei die dritte ringförmige Zone (1030) eine Refraktionskraft aufweist, die positiver ist als die distanzkorrigierende Refraktionskraft des zentralen Bereichs (105) und sich von der Refraktionskraft der ersten ringförmigen Zone (103a) unterscheidet.

6. Die Kontaktlinse (101) gemäß einem der Ansprüche 1 bis 3, wobei die dritte ringförmige Zone (103c) eine Refraktionskraft aufweist, die um +2,0 D positiver ist als die distanzkorrigierende Refraktionskraft des zentralen Bereichs (105).

7. Die Kontaktlinse (101) gemäß einem der vorstehenden Ansprüche, wobei die distanzkorrigierende Refraktionskraft zwischen +0,5 D und -20,0 D liegt, wobei insbesondere die distanzkorrigierende Refraktionskraft zwischen +0,5 D und -6,0 D liegt.

8. Die Kontaktlinse gemäß einem der vorstehenden Ansprüche, wobei die zweite ringförmige Zone (103b) die gleiche Refraktionskraft wie die distanzkorrigierende Refraktionskraft des zentralen Bereichs (105) aufweist.

9. Die Kontaktlinse (101) gemäß einem der vorstehenden Ansprüche, wobei die vierte ringförmige Zone (103d) die gleiche Refraktionskraft wie die distanzkorrigierende Refraktionskraft des zentralen Bereichs (105) aufweist.

10. Die Kontaktlinse (101) gemäß einem der vorstehenden Ansprüche, wobei der Linsenkörper (106) ein Hydrogelmaterial oder ein Silikonhydrogelmaterial aufweist.

11. Die Kontaktlinse (101) gemäß einem der vorstehenden Ansprüche, wobei der Linsenrand eine Randdicke von weniger als 0,10 mm aufweist, gemessen in einem radialen Abstand von 0,10 mm vom Linsenrand, wobei insbesondere die Linsenranddicke weniger als 0,08 mm in einem radialen Abstand von 0,10 mm vom Linsenrand beträgt, wobei insbesondere die Linsenranddicke weniger als 0,08 mm in einem radialen Abstand von 0,07 mm vom Linsenrand beträgt, wobei insbesondere die Linsenranddicke weniger als 0,05 mm in einem radialen Abstand von 0,07 mm vom Linsenrand beträgt.

12. Die Kontaktlinse (101) gemäß einem der vorstehenden Ansprüche, wobei die Kontaktlinse (101) eine Mittendicke von 0,06 mm bis 0,20 mm aufweist.

13. Die Kontaktlinse (101) gemäß einem der vorstehenden Ansprüche, wobei die Refraktionskraftänderung an der Verbindungsstelle zwischen zwei angrenzenden Zonen in der optischen Zone (102) mindestens 6 D/mm beträgt, gemessen bei einer Auflösung von weniger als 0,09 mm.

14. Ein Verfahren (1000) zur Herstellung einer Kontaktlinse (101) gemäß einem der vorstehenden Ansprüche, wobei das Verfahren (1000) aufweist:
Bilden einer Kontaktlinse (101), wobei die Linse (101) einen Linsenkörper (106) aufweist, der eine optische Zone (102), eine die optische Zone (102) umgebende periphere Zone (104) und einen die periphere Zone (104) umgebenden Linsenrand aufweist, wobei die optische Zone (102) aufweist:
einen zentralen Bereich (105), wobei der zentrale Bereich (105) eine Krümmung aufweist, die auf einer optischen Achse (119) zentriert ist, wobei der zentrale Bereich (105) eine distanzkorrigierende Refraktionskraft und einen Sehnen-Durchmesser von 2,7 mm plus oder minus 0,04 mm aufweist; und
einer ersten ringförmigen Zone (103a), die den zentralen Bereich (105) umgibt, wobei die erste ringförmige Zone (103a) eine myopische Defokussierungszone mit einer Refraktionskraft ist, die positiver ist als die Refraktionskraft des zentralen Bereichs (105), wobei die erste ringförmige Zone (103a) eine Krümmung aufweist, die auf der optischen Achse (119) zentriert ist, und eine radiale Breite von 0,7 mm plus oder minus 0,01 mm aufweist;
eine zweite ringförmige Zone (103b), die die erste ringförmige Zone (103a) umgibt, wobei die zweite ringförmige Zone (103b) eine Distanzkorrekturzone ist und eine Krümmung aufweist, die auf die optische Achse (119) zentriert ist, wobei die zweite ringförmige Zone (103b) eine radiale Breite von 0,6 mm plus oder minus 0,01 mm aufweist; und
eine dritte ringförmige Zone (103C), die die zweite ringförmige Zone (103b) umgibt, wobei die dritte ringförmige Zone (1030) eine myopische Defokussierungszone mit einer Refraktionskraft ist, die positiver ist als die Refraktionskraft des zentralen Bereichs (105), wobei die dritte ringförmige Zone (103 c) eine Krümmung aufweist, die auf der optischen Achse (119) zentriert ist, und eine radiale Breite von 0,8 mm plus oder minus 0,015 mm aufweist; und
eine vierte ringförmige Zone (103d), die die dritte ringförmige Zone (103 c) umgibt, wobei die vierte ringförmige Zone (103d) eine Distanzkorrekturzone mit einer Krümmung ist, die auf der ersten optischen Achse (119) zentriert ist, wobei die vierte ringförmige Zone (103d) eine radiale Breite von 0,925 mm plus oder minus 0,015 mm aufweist.

15. Ein Verfahren zur Herstellung einer Kontaktlinse (101) gemäß Anspruch 14, wobei die Linse (101) unter Verwendung eines Drehverfahrens hergestellt wird.

16. Ein Verfahren (1000) zur Herstellung einer Kontaktlinse (101) gemäß Anspruch 14, wobei das Verfahren (1000) ferner aufweist:
Aufbringen der Kontaktlinsenformulierung auf eine konkave Formfläche eines ersten Kontaktlinsenformelements (1001), wobei die konkave Formfläche einen Formbereich aufweist, der der optischen Zone entspricht;
Anordnen eines zweiten Kontaktlinsenformelements in Kontakt mit dem ersten Kontaktlinsenformelement (1003), um eine Kontaktlinsenformbaugruppe zu bilden;
Polymerisieren der Kontaktlinsenformulierung (1005) in der Kontaktlinsenformbaugruppe, um eine polymerisierte Kontaktlinse zu bilden;
Entfernen der polymerisierten Kontaktlinse aus der Kontaktlinsenformbaugruppe (1007), um eine getrennte Kontaktlinse herzustellen; und
Verpacken der getrennten Kontaktlinse in einer Kontaktlinsenverpackung.

## Revendications

1. Lentille de contact (101), la lentille (101) comprenant un corps de lentille (106), et le corps de lentille (106) comprenant une zone optique (102), une zone périphérique (104) circonscrivant la zone optique (102), et un bord de lentille (108) circonscrivant la zone périphérique (104), la zone optique (102) comprenant :
une région centrale (105), la région centrale (105) présentant une courbure qui est centrée sur un axe optique (119), la région centrale (105) présentant un pouvoir réfractif de correction de distance et un diamètre de corde de 2,7 mm plus ou moins 0,04 mm ; et
une première zone annulaire (103a) circonscrivant la région centrale (105), la première zone annulaire (103a) étant une zone de défocalisation myopique présentant un pouvoir réfractif qui est plus positif que le pouvoir réfractif de la région centrale (105), la première zone annulaire (103a) présentant une courbure qui est centrée sur l'axe optique (119), et une largeur radiale de 0,7 mm plus ou moins 0,01 mm ;
une deuxième zone annulaire (103b) circonscrivant la première zone annulaire (103a), la deuxième zone annulaire (103b) étant une zone de correction de distance et présentant une courbure qui est centrée sur l'axe optique (119), la deuxième zone annulaire (103b) présentant une largeur radiale de 0,6 mm plus ou moins 0,01 mm ; et
une troisième zone annulaire (103c) circonscrivant la deuxième zone annulaire (103b), la troisième zone annulaire (103c) étant une zone de défocalisation myopique présentant un pouvoir réfractif qui est plus positif que le pouvoir réfractif de la région centrale (105), la troisième zone annulaire (103c) présentant une courbure qui est centrée sur l'axe optique (119), et une largeur radiale de 0,8 mm plus ou moins 0,015 mm ; et
une quatrième zone annulaire (103d) circonscrivant la troisième zone annulaire (103c), la quatrième zone annulaire (103d) étant une zone de correction de distance présentant une courbure qui est centrée sur le premier axe optique (119), la quatrième zone annulaire présentant une largeur radiale de 0,925 mm plus ou moins 0,015 mm.

2. Lentille de contact (101) selon la revendication 1, dans laquelle la première zone annulaire (103a) présente un pouvoir réfractif qui est plus positif de +3,0 D que le pouvoir réfractif de correction de distance de la région centrale (105).

3. Lentille de contact (101) selon la revendication 1, dans laquelle la première zone annulaire (103a) présente un pouvoir réfractif qui est plus positif de +2,0 D que le pouvoir réfractif de correction de distance de la région centrale (105).

4. Lentille de contact (101) selon la revendication 1 ou la revendication 2, dans laquelle la troisième zone annulaire (103c) présente un pouvoir réfractif qui est plus positif de +3,0 D que le pouvoir réfractif de correction de distance de la région centrale (105).

5. Lentille de contact (101) selon une quelconque revendication précédente, dans laquelle la troisième zone annulaire (103c) présente un pouvoir réfractif qui est plus positif que le pouvoir de correction de distance de la région centrale (105), et est différent du pouvoir réfractif de la première zone annulaire (103a).

6. Lentille de contact (101) selon l'une quelconque des revendications 1 à 3, dans laquelle la troisième zone annulaire (103c) présente un pouvoir réfractif qui est plus positif de +2,0 D que le pouvoir réfractif de correction de distance de la région centrale (105).

7. Lentille de contact (101) selon une quelconque revendication précédente, dans laquelle le pouvoir réfractif de correction de distance est compris entre +0,5 D et -20,0 D, facultativement, dans laquelle le pouvoir réfractif de correction de distance est compris entre +0,5 D et -6,0 D.

8. Lentille de contact selon une quelconque revendication précédente, dans laquelle la deuxième zone annulaire (103b) présente le même pouvoir réfractif que le pouvoir réfractif de correction de distance de la région centrale (105).

9. Lentille de contact (101) selon une quelconque revendication précédente, dans laquelle la quatrième zone annulaire (103d) présente le même pouvoir réfractif que le pouvoir réfractif de correction de distance de la région centrale (105).

10. Lentille de contact (101) selon une quelconque revendication précédente, dans laquelle le corps de lentille (106) comprend un matériau hydrogel ou un matériau hydrogel de silicone.

11. Lentille de contact (101) selon une quelconque revendication précédente, dans laquelle le bord de lentille présente une épaisseur de bord inférieure à 0,10 mm mesurée à une distance radiale de 0,10 mm depuis le bord de lentille, facultativement, dans laquelle l'épaisseur du bord de lentille est inférieure à 0,08 mm à une distance radiale de 0,10 mm depuis le bord de lentille, facultativement, dans laquelle l'épaisseur du bord de lentille est inférieure à 0,08 mm à une distance radiale de 0,07 mm depuis le bord de lentille, facultativement, dans laquelle l'épaisseur du bord de lentille est inférieure à 0,05 mm à une distance radiale de 0,07 mm depuis le bord de lentille.

12. Lentille de contact (101) selon une quelconque revendication précédente, la lentille de contact (101) présentant une épaisseur centrale allant de 0,06 mm à 0,20 mm.

13. Lentille de contact (101) selon une quelconque revendication précédente, présentant un taux de variation du pouvoir réfractif à la jonction entre deux zones adjacentes quelconques dans la zone optique (102) d'au moins 6 D/mm lorsqu'il est mesuré à une résolution inférieure à 0,09 mm.

14. Procédé (1000) de fabrication d'une lentille de contact (101) selon une quelconque revendication précédente, le procédé (1000) comprenant :
la formation d'une lentille de contact (101), la lentille (101) comprenant un corps de lentille (106) comprenant une zone optique (102), une zone périphérique (104) circonscrivant la zone optique (102), et un bord de lentille circonscrivant la zone périphérique (104), la zone optique (102) comprenant :
une région centrale (105), la région centrale (105) présentant une courbure qui est centrée sur un axe optique (119), la région centrale (105) présentant un pouvoir réfractif de correction de distance et un diamètre de corde de 2,7 mm plus ou moins 0,04 mm ; et
une première zone annulaire (103a) circonscrivant la région centrale (105), la première zone annulaire (103a) étant une zone de défocalisation myopique présentant un pouvoir réfractif qui est plus positif que le pouvoir réfractif de la région centrale (105), la première zone annulaire (103a) présentant une courbure qui est centrée sur l'axe optique (119), et une largeur radiale de 0,7 mm plus ou moins 0,01 mm ;
une deuxième zone annulaire (103b) circonscrivant la première zone annulaire (103a), la deuxième zone annulaire (103b) étant une zone de correction de distance et présentant une courbure qui est centrée sur l'axe optique (119), la deuxième zone annulaire (103b) présentant une largeur radiale de 0,6 mm plus ou moins 0,01 mm ; et
une troisième zone annulaire (103c) circonscrivant la deuxième zone annulaire (103b), la troisième zone annulaire (103c) étant une zone de défocalisation myopique présentant un pouvoir réfractif qui est plus positif que le pouvoir réfractif de la région centrale (105), la troisième zone annulaire (103c) présentant une courbure qui est centrée sur l'axe optique (119), et une largeur radiale de 0,8 mm plus ou moins 0,015 mm ; et
une quatrième zone annulaire (103d) circonscrivant la troisième zone annulaire (103c), la quatrième zone annulaire (103d) étant une zone de correction de distance présentant une courbure qui est centrée sur le premier axe optique (119), la quatrième zone (103d) annulaire présentant une largeur radiale de 0,925 mm plus ou moins 0,015 mm.

15. Procédé de fabrication d'une lentille de contact (101) selon la revendication 14, dans lequel la lentille (101) est formée à l'aide d'un procédé de tournage.

16. Procédé (1000) de fabrication d'une lentille de contact (101) selon la revendication 14, le procédé (1000) comprenant en outre :
le placement de la formulation de lentille de contact sur une surface de moulage concave d'un premier organe de moule de lentille de contact (1001), la surface de moulage concave comprenant une région de moulage qui correspond à la zone optique ;
le placement d'un second organe de moule de lentille de contact en contact avec le premier organe de moule de lentille de contact (1003) pour former un ensemble formant moule de lentille de contact ;
la polymérisation de la formulation de lentille de contact (1005) dans l'ensemble formant moule de lentille de contact pour former une lentille de contact polymérisée ;
le retrait de la lentille de contact polymérisée de l'ensemble formant moule de lentille de contact (1007) pour produire une lentille de contact séparée ; et
le conditionnement de la lentille de contact séparée dans un emballage de lentille de contact.
